# EUROPÄISCHE PATENTSCHRIFT

(11) **EP 1 318 782 B1**
(45) Veröffentlichungstag und Bekanntmachung des Hinweises auf die Patenterteilung: **23.04.2008**
(21) Anmeldenummer: 01976238.4
(22) Anmeldetag: 19.09.2001
(51) Int. Cl.: A61G 1/044, A61G 1/04

(54) **Krankentrage mit Patienten-Rückhaltesystem, insbesondere für liegende Personen**
Stretcher with patient restraint system, especially for reclining persons
Civière équipée d'un système de retenue de patient, notamment destinée aux personnes en position couchée

(30) Priorität: 19.09.2000 DE 20016319 U; 23.11.2000 DE 10058346; 20.04.2001 DE 20106924 U
(43) Veröffentlichungstag der Anmeldung: 18.06.2003
(73) Patentinhaber: Schnitzler, Alois, 53859 Niederkassel-Mondorf (DE)
(72) Erfinder: Schnitzler, Alois, 53859 Niederkassel-Mondorf (DE)
(74) Vertreter: Diehl, Hermann O. Th.
(86) Internationale Anmeldenummer: PCT/EP2001/010829
(87) Internationale Veröffentlichungsnummer: WO 2002/024137

(56) Entgegenhaltungen:
- DE-A- 3 026 406
- DE-U- 20 016 319
- DE-U- 20 106 924
- FR-A- 2 583 977
- US-A- 2 033 779
- US-A- 3 046 982
- US-A- 5 014 374
- US-A- 5 014 724
- US-A- 5 400 448
- US-A- 5 860 176

## Beschreibung

Die Erfindung betrifft eine Krankentrage mit Patienten-Rückhaltesystem und Auflage, insbesondere für liegende Personen, auf der die liegende Person durch Schultergurt und Quergurte gegen Verschieben gesichert ist.

Krankentragen mit einem Patienten-Rückhaltesystem dienen in erster Linie zur Sicherung des Patienten beim Transport auf der Krankentrage zum und vom Kranken-Transportfahrzeug, sie sollen aber auch so ausgelegt sein, dass sie den Patienten während der Fahrt mit dem Kranken-Transportfahrzeug beim plötzlichen Bremsen und bei Verkehrsunfällen gegen Verletzungen ausreichend sichern. Üblicherweise liegt der Patient während des Krankentransport im Kranken-Transportfahrzeug mit dem Kopfteil der Krankentrage in Fahrtrichtung des Fahrzeuges. Der Patient ist auf der Krankentrage durch Schulter- und einen querverlaufenden Beckengurt gegen ein plötzliches Verschieben auf der Krankentrage in Fahrtrichtung des Fahrzeuges gesichert.

Eine Krankentrage der eingangs genannten Art ist beispielsweise aus der deutschen Patentschrift 3026406 bekannt. Der liegende Patient wird hierbei durch Schulter- und Quergurte auf der Krankentrage in seiner Position gehalten. Zusätzlich weist die bekannte krankentrage im Schulterbereich des Patienten eine Rückhaltefläche auf, durch die der Patient bei einer stoßartigen Verzögerung, beispielsweise wenn der Krankenwagen bei einem Unfall auf ein Hindernis auffährt, im Schulterbereich abgestützt wird, wodurch ein Verschieben des Kopfes über das Ende der Liegefläche verhindert wird. Dadurch werden Verletzungen des Patienten beispielsweise durch ein Abknicken des Kopfes weitgehend vermieden.

Die US-Patentschrift US 5,014,374 offenbart eine Krankentrage mit einem Patienten-Rückhaltesystem, umfassend einen Quergurt. Die Trage weist einen Hüllsack und einstellbare Brust- und Hüftgurte, sowie an ihrer Oberseite eine Polsterung auf. Die Brust- und Hüftgurte sind vermittels eines längs verlaufenden Befestigungsgurts an dem Hüllsack befestigt.

Aus der US-Patentschrift 5,860,176 ist ebenfalls eine Krankentrage bekannt. Diese Krankentrage ist insbesondere für den Transport von Kindern vorgesehen. Hierzu ist eine separat vorgefertigte sackähnliche Hülle vorgesehen, in die der Patient so eingewickelt wird, dass die Hülle am Fußende geschlossen ist. Der derart in der sackähnlichen Hülle befindliche Patient wird dann durch einen Schulter- und Quergurt an der Liege befestigt. Das bekannte Rückhaltesystem sichert den Patienten beispielsweise in Form von Schultergurten zwar gegen eine plötzliche Verlagerung auf der Krankentrage beim Auffahrunfall in Fahrtrichtung, jedoch ist der Patient bei einem Auffahrunfall entgegen der Fahrtrichtung, d.h. von der Rückseite des Transportfahrzeuges, nur unzureichend gegen eine Verschiebung entgegen der Fahrtrichtung gesichert, da ein Hindurchgleiten des in dem Sack befindlichen Patienten unter dem Quergurt nicht ausgeschlossen werden kann. Auch ist ein Verschieben des Patienten in dem ihn umgebenden Sack möglich, da dieser nicht immer auf die individuellen Körpermaße des Patienten abgestimmt sein kann. Um eine an die Körpergröße des Patienten angepasste Hülle zu erhalten, müssen bei dem bekannten Rückhaltesystem unterschiedlich konfektionierte Transportsäcke bereitgehalten werden. Dies erweist sich jedoch insbesondere beim Transport der Patienten bei Rettungseinsätzen als nachteilig, da es hierbei auf eine schnellstmögliche und einfache Handhabung ankommt.

Der Erfindung liegt daher die Aufgabe zugrunde, eine Krankentrage der eingangs genannten Art dahingehend weiter zu verbessern, dass die Krankentrage ohne nennenswerte konstruktive Änderungen den sicheren Transport von liegend zu befördernden Patienten, d.h. vom Kleinkind bis zum Erwachsenen, ermöglichen soll, ohne dass zusätzliche Elemente, welche die unterschiedlichen Größen vom Erwachsenen zum Kind darstellen, entfernt oder montiert werden müssen.

Diese Aufgabe wird mit einer Krankentrage mit der technischen Merkmalen des Anspruchs 1 gelöst.

Vorzugsweise ist die Halteeinrichtung für Kinder mit der Auflage der Krankentrage fest vernäht und/oder verschweißt und im oberen Drittel der Auflage unterhalb des Kopfteils angeordnet. Die mit der Rückhaltevorrichtung für Erwachsene erfindungsgemäß kombinierte Kinder-Rückhaltevorrichtung ermöglicht somit eine Doppelbenutzung der damit ausgestatteten Krankentragen. Die an der Krankentrage vorhandenen Rückhaltesysteme sind ohne langes Suchen im Rettungswagen immer gebrauchsfertig und erfordern auch keinen zusätzlichen Platz für die Unterbringung. Von besonderem Vorteil ist es darüber hinaus, dass die Kinder-Rückhaltevorrichtung so ausgebildet und in der Auflage integriert sowie an der gesamten Krankentrage so angeordnet ist, dass es beim Transport von erwachsenen Patienten in keiner Weise störend in Erscheinung tritt.

Ausserdem hat es sich gezeigt, dass zusätzlich zu den bei Beschleunigungen/Verzögerungen in Fahrtrichtung und entgegen der Fahrtrichtung bei Auffahrunfällen auftretenden hohen Kräften auch bei einem seitlichen Zusammenstoß von Fahrzeugen ausserordentlich hohe Kräfte auftreten können, die auf den Patienten seitlich einwirken und diesen bei nicht ausreichender Sicherung auf der Krankentrage zur Seite schleudern können.

Der Erfindung liegt daher die weitere Aufgabe zugrunde, eine Krankentrage dahingehend weiter zu verbessern, dass zusätzlich zu der Sicherung des Patienten in Längsrichtung der Trage sowohl in Fahrtrichtung als auch entgegen der Fahrtrichtung eine ausreichende Sicherung gegen seitliche bzw. diagonale Beschleunigungen quer zur Längsrichtung der Krankentrage gewährleistet ist.

Diese Aufgabe wird, ausgehend von einer Krankentrage gemäß dem Oberbegriff des Anspruchs 1, dadurch gelöst, dass eine seitliche Auffangvorrichtung für den Patienten vorgesehen ist, mit einem Beckengurt, der an beiden Längsseiten der Krankentrage mit jeweils zwei zur Tragenmitte hin V-förmig zusammengeführten Gurtabschnitten an vorzugsweise vier in Längsrichtung der Trage jeweils paarweise beabstandeten Fixpunkten angeschlagen und mit den Schultergurten derart verbunden ist, dass das Gurtschloss des Beckengurtes seitlich am Patienten liegt.

Die seitliche Auffangvorrichtung hat den besonderen Vorteil, dass der Quergurt und die beiden Schultergurte durch ein einziges Gurtschloss zusammengehalten werden, welches gleichzeitig den Patienten gegen eine unerwünschte Vorwärts- und Seitenbewegung schützt. Auch ist das Gurtschloss für den Patienten dadurch nicht unangenehm, da es seitlich vom Patienten liegt und somit den Patienten im Bereich des Brustkorbes, des Bauches und der in dessen Nähe befindlichen inneren Organe durch dessen Gewicht nicht belastet. Durch die Vierpunktlagerung des Beckengurtes und die Haltepunkte der beiden Schultergurte wird eine sehr sichere Sechspunkthalterung des Patienten auf der Krankentrage erreicht. Besonders vorteilhaft ist es dabei, dass die beiden Hälften des Beckengurtes an den Längsseiten der Krankentrage nicht nur einfach befestigt sind, sondern vielmehr an jeweils zwei in Längsrichtung der Krankentragen beabstandeten Fixpunkten befestigt sind. Dies schafft einerseits eine doppelte Sicherheit bei starken Beschleunigungen diagonal oder quer zur Längsrichtung der Krankentrage, sorgt aber ausserdem auch bei Beschleunigungen in Fahrtrichtung entgegen der Fahrtrichtung dafür, dass der Beckengurt sicher in seiner Lage am Körper des Patienten verbleibt und selbst bei höchsten Beschleunigungen seine Sicherungslage nur wenig verändert. Dies wirkt sich auch besonders vorteilhaft auf die Verbindung des Beckengurtes mit den beiden Schultergurten aus, die in Form einer Schlaufe um den Beckengurt herumgeführt sind und somit keine zusätzlichen Gurtschlösser benötigen. Beide Schultergurte können vielmehr als ein einziges längenveränderbares Schlaufenteil ausgeführt sein oder gegebenenfalls auch durch ein einziges längenveränderbares Gurtschloss zusammengehalten werden, ohne auf den Körper des Patienten nachteilig einzuwirken.

Lösungen zu den oben genannten Problemen finden sich auch bereits in der älteren deutschen veröffentlichten Gebrauchsmusterschrift DE 20016319.1 und in der unveröffentlichten deutschen Patentanmeldung DE 10058346.6 sowie in der ebenfalls unveröffentlichten deutschen Gebrauchsmusteranmeldung DE 20106924.5 des Anmelders.

Die vorliegende Erfindung schlägt zusammenfassend erstmals eine Sicherheits-Krankentrage mit einer Tragenauflage vor, die dem liegend zu befördernden Patienten, d.h. vom Kleinkind bis zum Erwachsenen, eine größtmögliche Sicherheit gegen unerwünschte Vorwärts-, Rückwärts- und--se-iten15ewegung- -sowi-e---nin der Bewegung nach oben bietet, wie sie beispielsweise bei Auffahrunfällen in Fahrtrichtung in Folge eines Auftreffens des Krankenfahrzeuges auf ein Hindernis oder entgegen der Fahrtrichtung in Folge eines rückseitigen Auffahrunfalles oder auch bei einem seitlichen Zusammenstoß von Fahrzeugen auftreten können, ohne dass zusätzliche Elemente, welche die unterschiedliche Größe des Erwachsenen zum Kind darstellen, montiert oder entfernt werden müssen.

Erstmals wird eine Krankentrage mit integriertem Automatik-Rückhaltesystem vorgeschlagen, welche die in der europäischen Norm DIN EN 1789 aufgestellten Sicherheitsanforderungen alle erfüllt. Das Material wurde im EURO-NORM-TEST DIN 1789 Beschleunigungskräften von bis zu 10 g ausgesetzt. Der Test wurde vom TÜV Rheinland durchgeführt und bestanden.

Vorteilhafte Weiterbildungen der Erfindung ergeben sich aus der nachfolgenden Beschreibung und anhand der Figuren und den Patentansprüchen.

Bevorzugte Ausführungsbeispiele der Erfindung sind in den nachfolgenden Figuren schematisch dargestellt. Es zeigen
- Fig. 1: eine Krankentrage in schematischer Ansicht mit einem Gurt-Rückhaltesystem für Erwachsene, das mit einer Fußstütze am Fußende der Matratze für den Patienten versehen ist,
- Fig. 2: eine schematische Draufsicht auf die Krankentrage mit dem Gurt-Rückhaltesystem gemäß Fig. 1,
- Fig. 3: eine schematische Seitenansicht der Krankentrage gemäß Fig. 1 und 2,
- Fig. 4: einen vergrößerten Teilschnitt durch das Kopfende der Krankentrage mit einem in Längsrichtung der Trage verschiebbaren Kopfteil gemäß Schnittlinie IV-IV von Fig. 2,
- Fig. 5: einen weiteren Schnitt durch den Kopfteil der Krankentrage gemäß Schnittlinie V-V von Fig. 4,
- Fig. 6a: eine schematische Ansicht einer ersten Ausführungsform einer Krankentrage mit integrierter Kinder-Rückhaltevorrichtung,
- Fig. 6b: eine schematische Ansicht eines weiteren Ausführungsbeispiels einer Krankentrage mit integrierter Kinder-Rückhaltevorrichtung,
- Fig. 7: einen horizontalen Schnitt durch die Krankentrage gemäß Schnittlinie VII-VII von Fig. 6a bei geschlossener Kinder-Rückhaltevorrichtung,
- Fig. 8: einen Schnitt bei geöffneter Kinder-Rückhaltevorrichtung,
- Fig. 9: weitere Einzelheiten des Rückhaltesystems,
- Fig. 10: eine Draufsicht auf die Matratze der Krankentrage mit Kopfteil und Anordnung von gegeneinander verstellbaren Schultergurten in einer Teildarstellung,
- Fig. 11: eine Seitenansicht der Krankentrage in Richtung des Pfeiles XI von Fig. 10 und
- Fig. 12: eine Unteransicht der Matratze mit den in der Breite gegeneinander verstellbaren Schultergurten,
- Fig. 13: eine erste Ausführungsform einer Krankentrage mit einer seitlichen Auffangvorrichtung in Seitenansicht,
- Fig. 14: eine Draufsicht auf die Krankentrage von Fig. 13, wobei hauptsächlich die für die Erfindung wesentlichen Merkmale dargestellt sind,
- Fig. 15: eine zweite Ausführungsform einer Krankentrage mit einer seitlichen Auffangvorrichtung in der Draufsicht, und
- Fig. 16: Einzelheiten einer seitlichen Auffangvorrichtung in Richtung des Pfeiles IV von Fig. 15 in vergrößerter Darstellung.

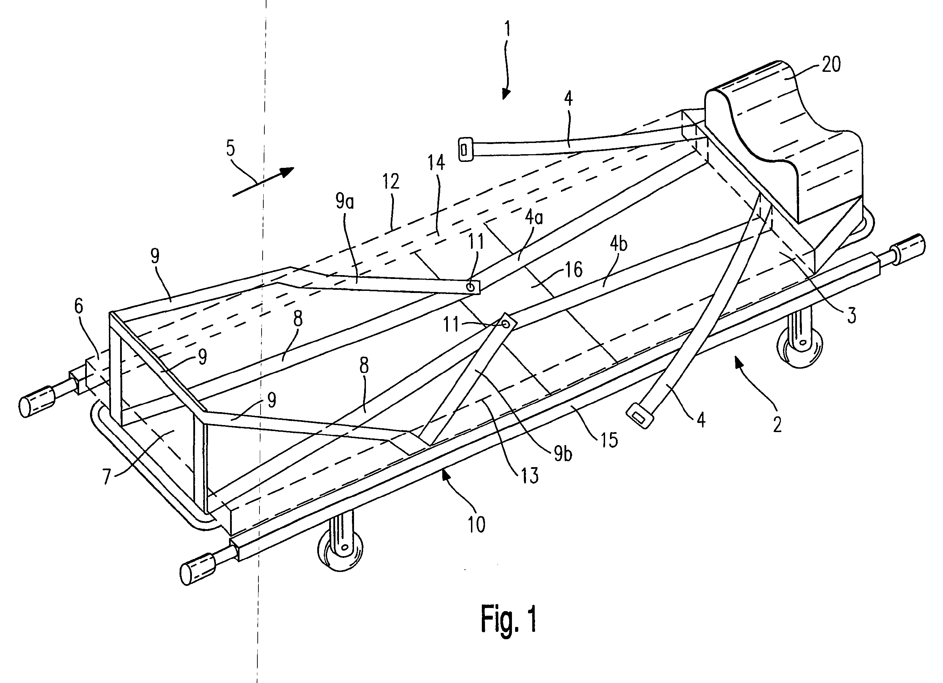

In Fig. 1 bis 5 ist eine Krankentrage 1 mit einem Patienten-Rückhaltesystem 2 für liegende erwachsene Personen mit Kopfstütze 20 und eine matratzenförmigen Tragenauflage 3 gezeigt, auf der die liegende Person durch Schultergurte 4 und hier nicht dargestellte Quergurte gesichert ist. Die Kopfstütze 20 ist am Kopfende 22 der Matratze 3 längsverschiebbar angeordnet, und am Fußende 6 der Matratze befindet sich eine die Oberseite der Matratze überragende Fußstütze 7, die durch Gurte 8, 9 gesichert ist, die mit dem Tragengestell 10 fest verbunden sind.

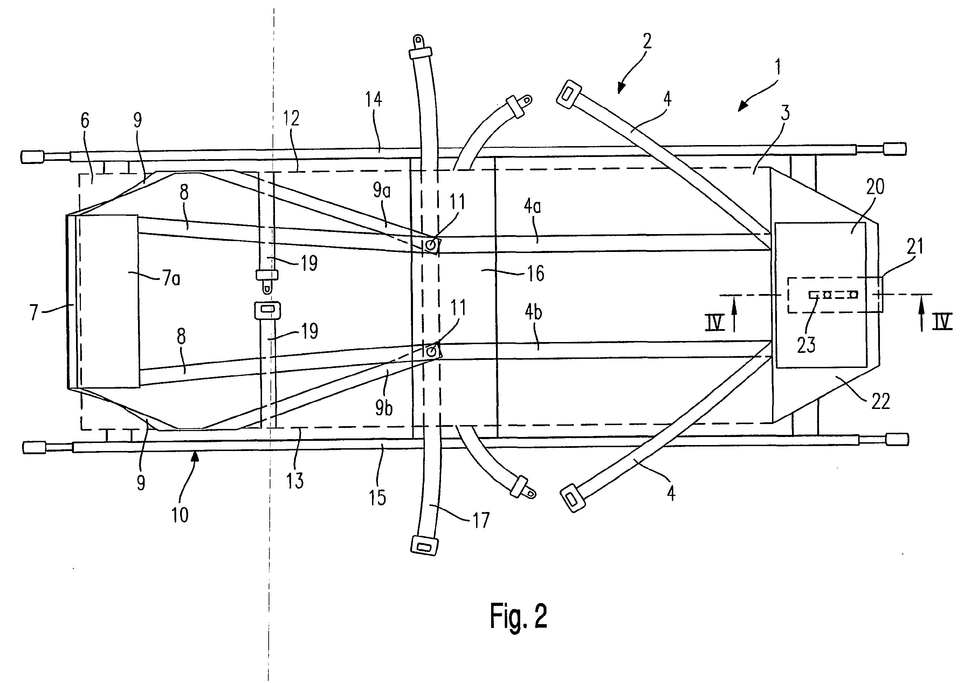

Wie in Fig. 2 bis 5 im einzelnen gezeigt ist, ist die Kopfstütze 20 an einem in Längsrichtung der Krankentrage anschlagbegrenzt verschiebbaren Tragbügel 21 befestigt, der das Kopfende der Matratze U-förmig untergreift und an seinem unteren U-Schenkel einen Längsschlitz 23 aufweist, mit dem er an zwei am Tragengestell 10 im Abstand voneinander befestigten Führungsbolzen 24 hin- und herverschiebbar geführt ist.

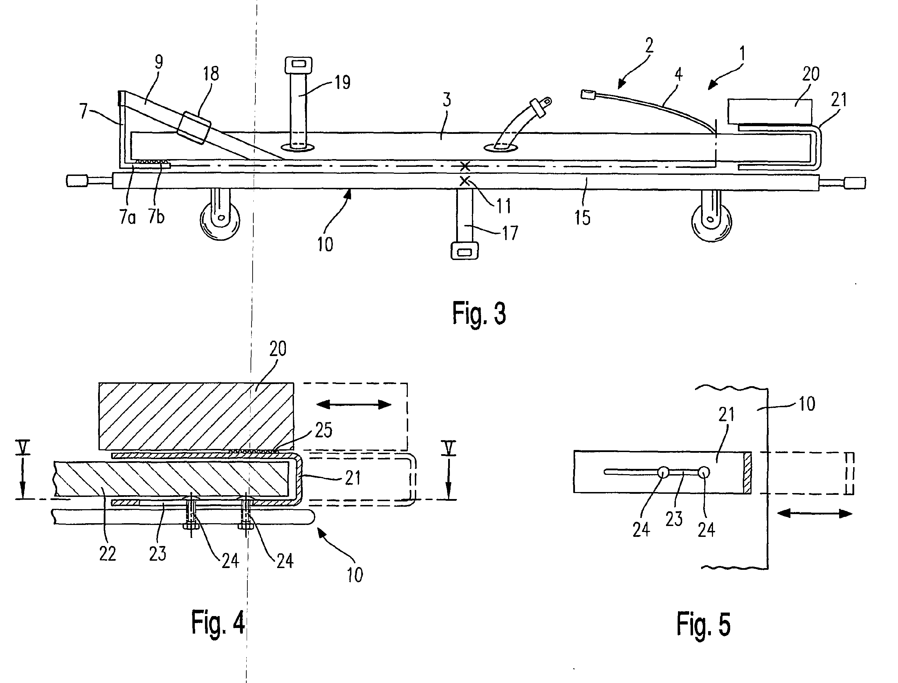

Der Tragbügel 21 für die Kopfstütze ist mit den Führungsbolzen 24 in mindestens einer Endlage, wie in Fig. 4 und 5 gezeigt, festklemmbar, wobei die Kopfstütze an dem oberen Schenkel des Tragbügels mittels Klettband 25 lösbar befestigt ist.

Um die liegende Person nicht nur in Fahrtrichtung 5 (vgl. Fig. 1) des Krankentransportfahrzeuges gegen einen Unfall zu sichern, ist am Fußende 6 der Matratze die die Oberseite der Matratze überragende Fußstütze 7 durch die Gurte 8, 9 befestigt, die mit dem Tragengestell 10 an mindestens einem oder zwei Fixpunkten 11 fest verbunden sind. Die Fixpunkte 11 befinden sich am Tragengestell 10 in einem zentralen Mittelbereich.

Die Fußstütze 7 besteht aus einer am Fußende 6 der Matratze 3 senkrecht aufragenden Platte aus einem formsteifen Material. Sie ist an der Matratze 3 mit einem das Fußende der Matratze untergreifenden abgewinkelten Teil 7a (vgl. Fig. 2 und 3) gesichert.

Ausserdem ist die Fußstütze 7 in Längsrichtung der Trage 2 durch mindestens zwei unter der Matratze verlaufende Längsgurte 8 mit den Fixpunkten 11 am Mittelteil des Tragengestelles 10 fest verbunden und oberhalb der Matratze durch ein an beiden Seiten 12, 13 der Matratze 3 schräg verlaufendes Gurtband 9 gesichert. Die beiden Enden 9a, 9b des Gurtbandes 9 sind seitlich unter die Matratze 3 geführt und jeweils zusammen mit den beiden Längsgurten 8 an jeweils einem zentralen Fixpunkt 11 am Tragengestell 10 gemeinsam befestigt.

Für die Befestigung der Längs- und Schräggurte 8, 9 für die Fußstütze 7 weist das Tragengestell 10 einen sich zwischen seinen Längsholmen 14, 15 erstreckenden besonders formstabilen mittigen Querträger 16 für die Fixpunkte 11 auf, an denen auch die Enden 4a, 4b der Schultergurte 4 für die liegende Person unter der Matratze befestigt sind.

An den Fixpunkten 11 unterhalb des Tragengestells 10 ist zusätzlich ein Quergurt 17 (vgl. Fig. 2 und 3) für die liegende Person im Beckenbereich mit endseitigen Schlossteilen befestigt.

Um das Gurtsystem und die Position der liegenden Person an unterschiedliche Körpergrößen anpassen zu können, sind die beiden schräg nach unten verlaufenden Abschnitte des oberen Gurtbandes 9 für die Fußstütze 7 vorteilhafterweise durch verstellbare Schloßteile oder verstellbare Gurtschlaufen 18 (vgl. Fig. 3) längeneinstellbar.

Der abgewinkelte Teil 7a der Fußstütze 7 ist an der Unterseite der Matratze 3 zusätzlich mittels Klettband 7b festgelegt.

Ausserdem ist im Kniebereich der liegenden Person an der Matratze ein die Oberschenkel übergreifendes Gurtband 19 (vgl. Fig. 2) vorgesehen.

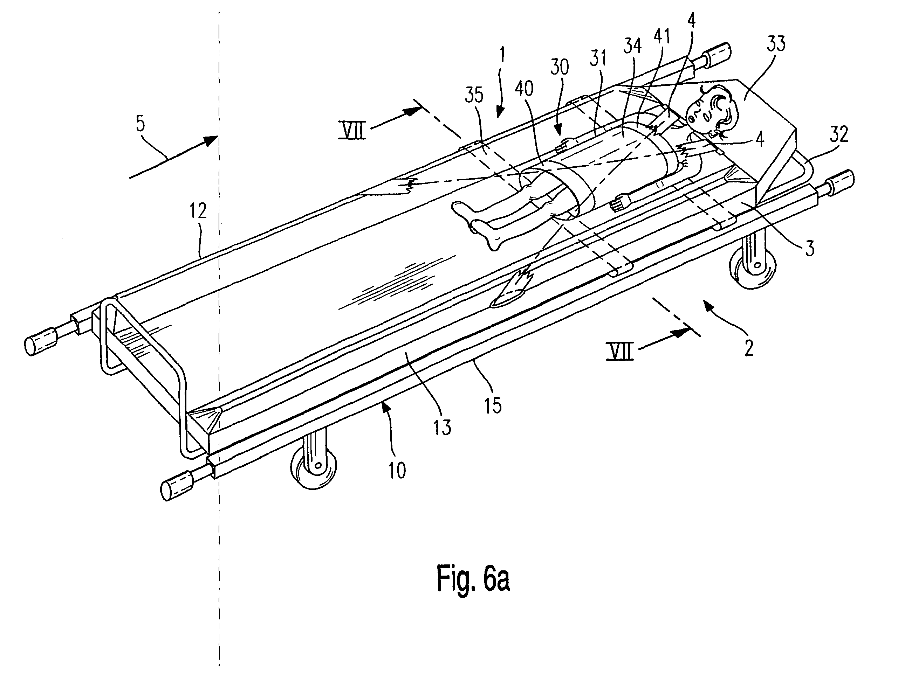

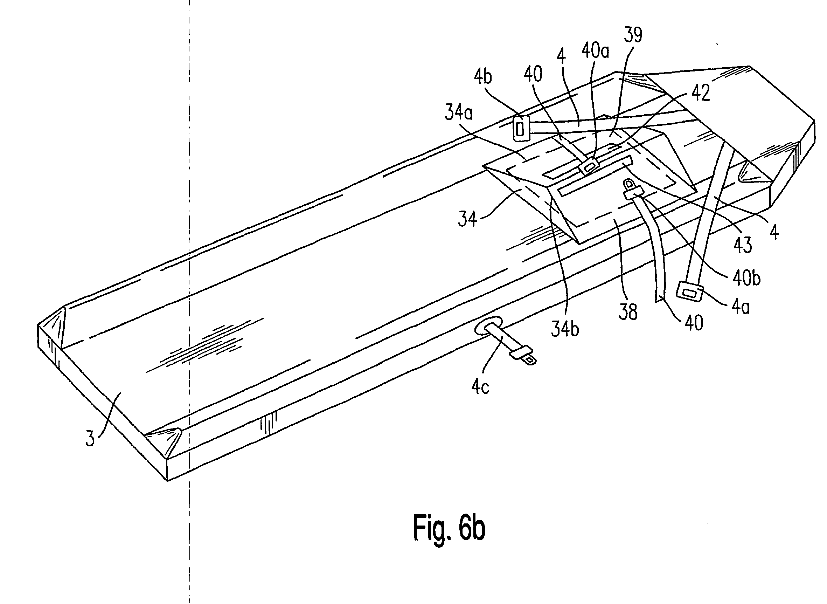

In den Fig. 6 bis 12 sind Ausführungsformen der Erfindung einer Krankentrage mit einer integrierten Rückhaltevorrichtung für Kleinkinder gezeigt.

Wie in Fig. 6a dargestellt, ist die Krankentrage 1 mit einem kombinierten Patienten-Rückhaltesystem 2 versehen, das aus einer Rückhaltevorrichtung für erwachsene Personen ,wie bei der Ausführungsform gemäß Fig. 1 bis 5 dargestellt ist, aus einer Kopfstütze, einer Fußstütze sowie Schulter- und Quergurten bestehen kann, ausserdem aber noch eine integrierte Rückhaltevorrichtung 30 für Kinder und Kleinstkinder aufweist, die mit einer an die Körperabmessungen von Kindern und Kleinstkindern leicht anpassbaren Halteeinrichtung 31 versehen ist, die den Körper des Kindes umschließt und mit der matratzenförmigen Auflage 3 und der Stützkonstruktion 32 für die Matratze 3 gegen eine unzulässige Verlagerung sicher verbunden ist.

Wie in Fig. 6a weiterhin zu erkennen ist, ist die Krankentrage mit der Kinder-Rückhaltevorrichtung 30 mit Gurtverbindungen ausgestattet und im oberen Drittel der Matratze 3 unterhalb des Kopfteils 33 angeordnet.

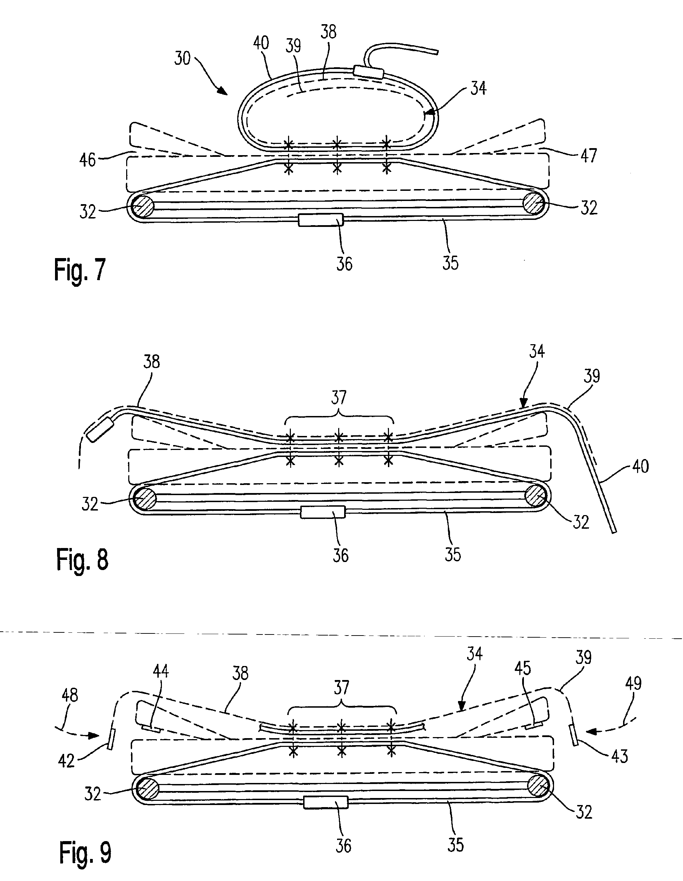

Die Kinder-Rückhaltevorrichtung 30 besteht, wie in Fig. 6a im einzelnen zu erkennen ist, aus einer den Körper umhüllenden Manschette 34, die an mindestens einem mit der Matratze 3 fest verbundenen Haltegurt 35 befestigt ist, der ausserdem um die Stützkonstruktion 32 für die Matratze 3 unten herumgeführt und an der Unterseite der Krankentrage 1 mit einem in Fig. 7 dargestellten Gurtschloß 36 versehen ist.

Die Manschette 34 ist mit dem Haltegurt 35 und der Matratze 3 über ihre gesamte Länge beispielsweise in einem streifenförmigen mittleren Bereich 37 (vgl. Fig. 7) fest vernäht und verschweisst und weist zwei zu den Längsseiten der Matratze 3 gerichtete seitliche Lappen 38, 39 auf, die von beiden Seiten einander überlappend (siehe Fig. 7) um den Körper des Kindes herumgelegt werden können.

Die Manschette 34 hat vorzugsweise eine Länge von etwa 30 bis 40 cm in Längsrichtung der matratzenförmigen Auflage 3. Die in Fig. 6a dargestellte Manschette ist vorzugsweise rechtförmig ausgebildet und hat eine etwas größere Breite als die Matratze 3, wie dies in Fig. 9 gezeigt ist.

Die in Fig. 6a gezeigte Manschette 34 ist an ihrem unteren und an ihrem oberen Rand je mit einem verschließbaren Gurt 40, 41 derart versehen, dass der obere Gurt 41 der Manschette und die Manschette 34 den Körper des Kindes unter den Armen umschlingt. Hierdurch ist das Kind nicht nur durch die beiden Schultergurte 4 gegen eine Verlagerung in Fahrtrichtung 5, sondern auch durch die Manschette 34 und den oberen Gurt 41 gegen eine Verlagerung entgegen der Fahrtrichtung 5 sicher gehalten.

Fig. 6b zeigt eine weitere Ausführungsform einer integrierten Rückhaltevorrichtung 30 für Kinder und Kleinstkinder. Der Übersichtlichkeit wegen ist hier nur die matratzenförmige Auflage 3 ohne den in Fig. 6a gezeigten Patienten auf der Krankentrage dargestellt. Diese Ausführungsform unterscheidet sich gegenüber der in Fig. 6a dargestellten im wesentlichen nur dadurch, dass die Manschette 34 nicht mit dem in Fig. 6a gezeigten Haltegurt 35, sondern nur in ihrem Umfangsbereich 34a, wie dies in Fig. 6b dargestellt ist, mit der Matratze 3 sicher verbunden ist. Vorzugsweise ist die Manschette 34 in ihrem Umfangsbereich 34a linienförmig mit der matratzenförmigen Auflage 3 fest vernäht und verschweißt. Die in Fig. 6b dargestellte Manschette 34 hat ebenfalls eine etwas größere Breite als die Matratze 3, sie ist jedoch im Unterschied zu der in Fig. 6a dargestellten Manschette auf der Seite 34b trapezförmig abgewinkelt. Auch ist die in Fig. 6b dargestellte Manschette 34 nur in ihrem mittleren Bereich mit einem verschließbaren Gurt 40 versehen. Der Gurt 40 ist mit den Gurtschlössern 40a und 40b versehen. Dies ist völlig ausreichend da das Kind durch die Manschette 34 bereits unter dem Arm gegen ein nach unten rutschen gesichert ist. Die durch den Gurt 40 geschlossene Manschette 34 ermöglicht hierbei, dass das Kind seitlich und auch nach oben breitflächig gehalten wird, was bei dem Körperbau eines Kindes ganz wichtig ist. Durch die verschlossene Manschette 34 wird das Kind auch unter den Armen gegen ein nach unten rutschen gesichert. Dadurch dass die Kinder-Rückhaltevorrichtung 30 bereits mit der matratzenförmigen Auflage 3 fest verbunden ist, ist kein zusätzliches aufwendiges Befestigen notwendig. Somit bietet die erfindungsgemäße Kinder-Rückhaltevorrichtung eine größtmögliche Sicherheit gegen eine unerwünschte Vorwärts-, Rückwärts- und Seitenbewegung sowie gegen eine unerwünschte Bewegung nach oben, ohne das zusätzliche Elemente welche die unterschiedliche Größe vom Erwachsenen zum Kind darstellen, montiert oder entfernt werden müssen.

Damit die beiden seitlichen freien Lappen 38, 39 der Manschette 34 beim Transport von erwachsenen Patienten nicht stören, weist die Manschette 34 außerdem an ihren beiden äußeren Längsrändern Klettbandstreifen 42, 43 auf, die zur Verbindung mit entsprechenden Klettbandstreifen 44, 45, die an den beiden Längsseiten der matratzenförmigen Auflage 3 angeordnet sind, vergleiche Fig. 9, vorgesehen sind.

Diese Klettbandstreifen 44, 45 sind vorteilhafterweise in Längsfalten 46, 47 (vgl. Fig. 7 bis 9) an den beiden Längsseiten der Matratze 3 verdeckt angeordnet, so daß die beiden außenliegenden Ränder der Manschette 34, wie dies in der Schnittdarstellung von Fig. 9 mit gestrichelten Pfeilen 48, 49 gezeigt ist, an den Längsseiten der Matratze 3 befestigt werden können.

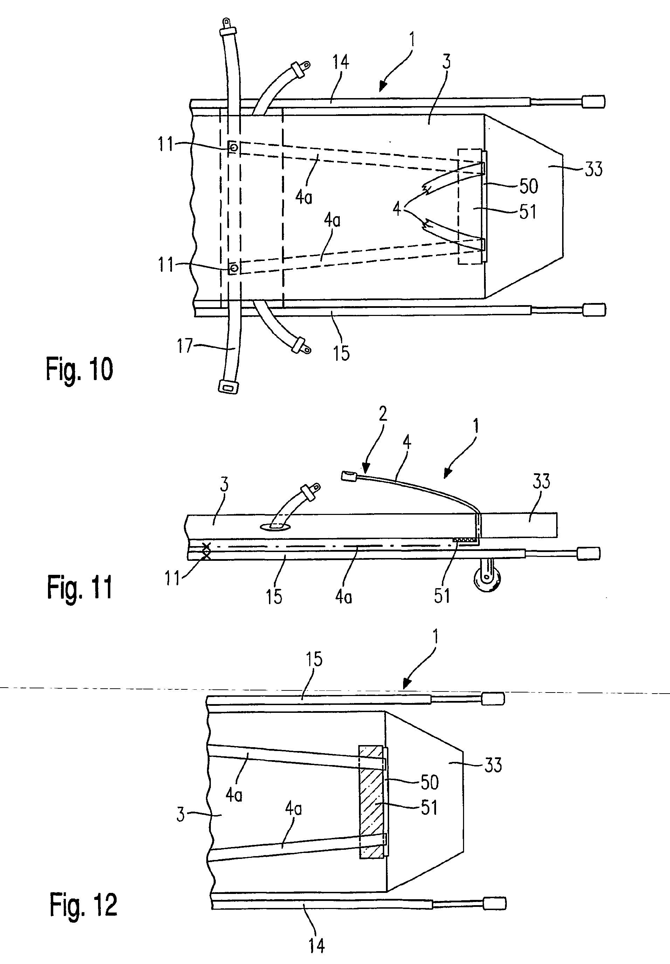

Bei dem in Fig. 6a dargestellten Ausführungsbeispiele sind die beiden Schultergurte 4 an die unterschiedliche Schulterbreite von Kindern und Erwachsenen anpaßbar. Hierzu ist an dem Durchführungsschlitz 50, vgl. Fig. 10 bis 12, für die Schultergurte 4 unterhalb des Kopfteils 33 der Matratze ein sich über die gesamte Breite bzw. Länge des Schlitzes 50 erstreckendes Klettband 51 für eine Verstellung des gegenseitigen Abstandes der Schultergurte 4 im Halsbereich des erwachsenen Patienten oder des Kindes angeordnet.

Der in Fig. 10 bis 12 gezeigte Durchführungsschlitz 50 ist jedoch fakultativ und nicht zwingend notwendig, beispielsweise ist dieser bei dem in Fig. 6b dargestellten Ausführungsbeispiel nicht vorhanden. Die in Fig. 6b gezeigten Schultergurte 4 können somit mittels der Gurtschlösser 4a und 4b mit den dazu korrespondierenden Gurten 4c, die auf jeder Seite der Auflage 3 vorhanden sind, verbunden werden. Vorzugsweise sind die Gurte 4c als Automatikgurte ausgeführt, die einfach und schnell zu bedienen sind. Dadurch, dass sie seitlich in der Auflage angeordnet sind, können sie sich nicht im Gestänge der Trage verheddern und sind zudem auch vor Verschmutzung und Beschädigung geschützt.

Die in den Fig. 6a und 6b dargestellte Körpermanschette 34 kann im übrigen auch doppelwandig mit Granulatfüllung als kleine Vakuum-Matratze ausgebildet sein, um dadurch die Lagerung des Patienten auf der Krankentrage noch zu verbessern.

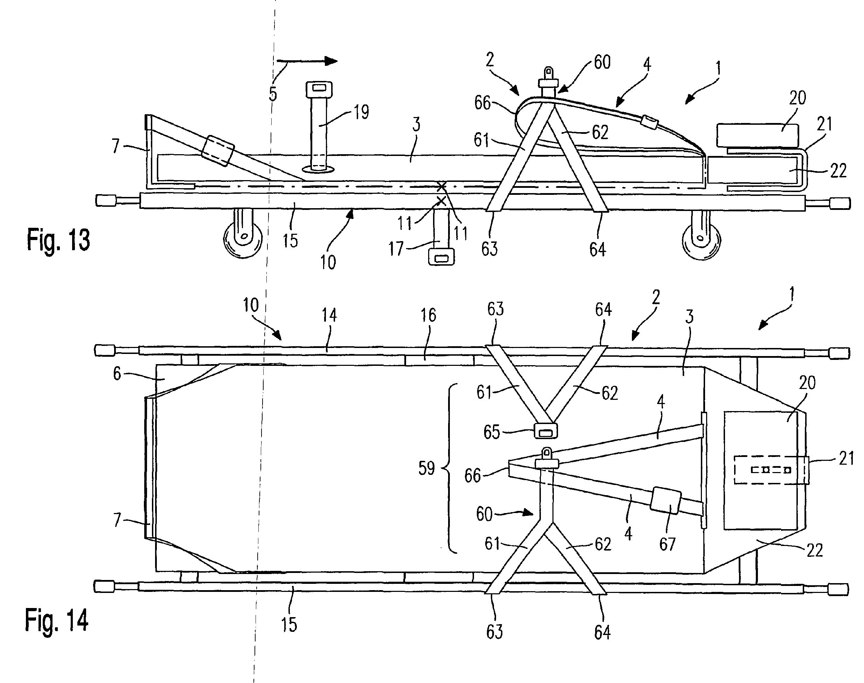

In den Fig. 13 bis 16 sind zwei Ausführungsformen einer Krankentrage 1 mit einem Patienten-Rückhaltesystem 2 für erwachsene Personen mit Kopfstütze 20 und eine matratzenförmigen Auflage 3 gezeigt, auf der der liegende Patient durch Schultergurte 4 und Quergurte gesichert ist. Die Kopfstütze 20 ist hierbei am Kopfende 22 der Matratze 3 längsverschiebbar angeordnet, und am Fußende 6 der Matratze befindet sich eine die Oberseite der Matratze 3 überragende Fußstütze 7, die durch die dargestellte Gurte gesichert ist, die mit dem Tragengestell 10 fest verbunden sind. Dies wurde bereits in Zusammenhang mit den Figuren 1 bis 5 ausführlich beschrieben und wird nicht hier nochmals behandelt.

An den Fixpunkten 11 unterhalb des Tragengestelles 10 ist ein Quergurt 17, siehe Fig. 1, für die liegende Person im Beckenbereich mit endseitigen Schloßteilen befestigt.

Außerdem ist im Kniebereich der liegenden Person an der Matratze 3 ein die Oberschenkel übergreifendes Gurtband 19, siehe Fig. 13, vorgesehen.

Wie in den Fig. 13 und 14 im einzelnen gezeigt ist, ist zusätzlich eine seitliche Auffangvorrichtung 59 für den Patienten vorgesehen. Die seitliche Auffangvorrichtung 59 umfaßt einen Beckengurt 60, der an beiden Längsseiten der Krankentrage 1 mit jeweils zwei zur Tragenmitte hin V-förmig zusammengeführten Gurtabschnitten 61, 62 an vorzugsweise vier in Längsrichtung der Trage jeweils paarweise beabstandeten Fixpunkten 63, 64 angeschlagen ist. Das Gurtschloß 65 ist dabei, wie insbesondere in der Draufsicht von Fig. 14 gezeigt ist am Beckengurt 60 gegenüber der Tragenmitte derart seitlich versetzt angeordnet, dass es seitlich am Patienten liegt und daher diesen nicht stört.

Die Enden der beiden Schultergurte 4 sind direkt miteinander verbunden und vom Kopfende 22 der matratzenförmigen Auflage 3 in Form einer Schlaufe 66 im Abstand von dem Gurtschloß 65 um den Beckengurt 60 herumgeführt.

Die Länge beider Schultergurte 4 zwischen dem Kopfende 22 der Matratze 3 und dem Beckengurt 60 kann durch eine einzige Einstellschlaufe 67 an einem der beiden Abschnitte des Schultergurtes 4 derart eingestellt werden, dass bei geschlossenem Beckengurt 60 beide Abschnitte des Schultergurtes 4 eng am Körper des Patienten anliegen.

Bei der in den Fig. 13 und 14 gezeigten ersten Ausführungsform können die vier Enden des Beckengurtes 60 mit den Fixpunkten 63, 64 jeweils paarweise an den beiden Längsholmen 14, 15 der Krankentrage 1 befestigt sein. Es ist aber auch möglich, die vier Enden des Beckengurtes 60 jeweils paarweise an einem die Längsholme 14, 15 der Krankentrage 1 verbindenden Querträger an der Unterseite des Tragengestelles 10 zu befestigen.

Weiterhin ist es auch möglich, die mit der Krankentrage 1 verbundenen beiden Gurtabschnitte des Beckengurtes 60, die zur Tragenmitte hin V-förmig zusammengeführt sind, als Gurtteile auszuführen, die an der Unterseite der Trage über die gesamte Breite der Trage durchgehend und auf diese Weise fest miteinander verbunden sind.

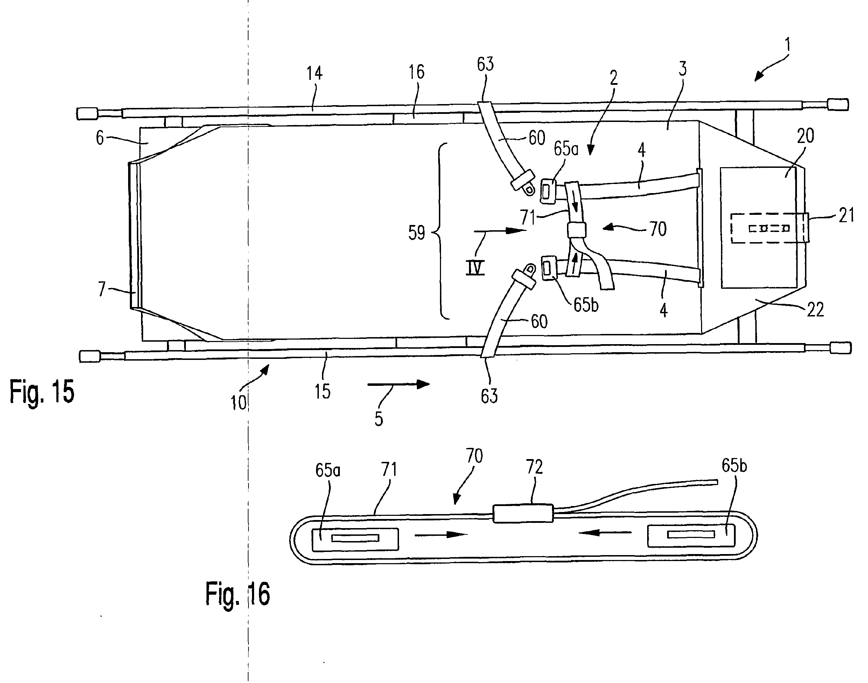

Bei der in den Fig. 15 und 16 gezeigten abgewandelten zweiten Ausführungsform, ist die seitliche Auffangvorrichtung 59 für den Patienten ebenfalls mit einem Beckengurt 60 ausgeführt, deren beiden Längsseiten der Krankentrage 1 befestigt ist.

Bei dieser Ausführungsformen sind die beiden Enden des Beckengurtes 60, wie in der Draufsicht von Fig. 15 gezeigt ist mit zwei Gurtschlössern 65a, 65b an den Enden der beiden Schultergurte 4 direkt verbunden. An den beiden Schultergurten 4 greift hierbei eine Spanneinrichtung 70 unmittelbar neben den beiden Gurtschlössern 65a, 65b an, die so ausgebildet ist, dass sie die Enden der Schultergurte 4 unter gleichzeitiger Spannung des Beckengurtes 60 zur Tragenmitte hin zusammenhält.

Die Spanneinrichtung 70 besteht, wie in der vergrößerten Detaildarstellung von Fig. 16 im einzelnen zu erkennen ist, aus einem längsveränderbaren Spanngurt 71, der um beide Schultergurte 4 schlaufenartig herumgeführt ist.

Der Spanngurt 71 weist eine einfache Einstellschlaufe 72 auf, so dass die beiden Schultergurte 4 nach Verbindung mit dem Beckengurt 60 ganz nach Bedarf in einen gewünschten gegenseitigen Abstand zusammengezogen werden können. Hierdurch ist es in einfacher Weise möglich, den Patienten durch eine Vierpunktsicherung sowohl in Längsrichtung der Trage 1 als auch seitlich und quer dazu gegen plötzliche Verlagerung infolge hoher Beschleunigungskräfte zu sichern.

Bei beiden Ausführungsformen einer seitlichen Auffangvorrichtung können die Schultergurte 4 zusätzlich mit Polsterauflagen versehen sein, um Druckstellen am Körper des Patienten zu vermeiden.

Die in den Fig. 13 und 14 gezeigte erste Ausführungsform der seitlichen Auffangvorrichtung hat den besonderen Vorteil, dass der Quergurt und die beiden Schultergurte durch ein einziges Gurtschloß zusammengehalten werden, das für den Patienten auch dadurch nicht unangenehm ist, als es seitlich vom Patienten liegt und somit den Patienten im Bereich des Brustkorbes, des Bauches und der in dessen Nähe befindlichen inneren Organe nicht belastet. Durch die Vierpunktlagerung des Beckengurtes und die Haltepunkte der beiden Schultergurte wird eine sehr sichere Sechspunkthalterung des Patienten auf der Krankentrage erreicht. Besonders vorteilhaft ist es dabei, dass die beiden Hälften des Beckengurtes an den Längsseiten der Krankentrage nicht nur einfach befestigt sind, sondern vielmehr an jeweils zwei in Längsrichtung der Krankentrage beabstandeten Fixpunkten. Dies schafft einerseits eine doppelte Sicherheit bei starken Beschleunigungen diagonal oder quer zur Längsrichtung der Krankentrage, sorgt aber außerdem auch bei Beschleunigungen in Fahrtrichtung und entgegen der Fahrtrichtung dafür, dass der Beckengurt sicher in seiner Lage am Körper des Patienten verbleibt und selbst bei höchsten Beschleunigungen seine Sicherungslage nur wenig verändert. Dies wirkt sich auch besonders vorteilhaft auf die Verbindung des Beckengurtes mit den beiden Schultergurten aus, die in Form einer Schlaufe um den Beckengurt herangeführt sind und somit keine zusätzlichen Gurtschlösser benötigen. Beide Schultergurte können vielmehr als ein einziges längenveränderbares Schlaufenteil ausgeführt sein oder gegebenenfalls auch durch ein einziges längenveränderbares Gurtsschloß zusammengehalten werden, ohne auf den Körper des Patienten nachteilig einzuwirken.

Die zweite in den Fig. 15 und 16 gezeigte Ausführungsform hat demgegenüber den Vorteil, dass die beiden Enden des Beckengurtes mit den Enden der beiden Haltegurte allein durch zwei Gurtschlösser verbunden werden, wobei durch die die beiden Schultergurte in unmittelbarer Nähe der Gurtschlösser zusammenhaltende Spanneinrichtung ebenso wie bei der ersten Ausführungsform der Erfindung in besonders einfacher Weise sichergestellt wird, dass bei seitlichen Einwirkungen auf den auf der Krankentrage liegenden Patienten die auftretenden Kräfte von dem Beckengurt nicht nur einseitig aufgenommen werden müssen. Durch die enge direkte Verbindung der beiden Enden des Beckengurtes mit den beiden Haltegurten und die gegenseitige Verspannung der beiden Gurtschlösser wird nämlich erreicht, dass die auf eine Seite des Beckengurtes einwirkende Kräfte über die beiden Gurtschlösser und die diese zusammenhaltende Spanneinrichtung auf das andere Ende des Beckengurtes übertragen werden. Zusammen mit den beiden Haltepunkten der Schultergurte wird somit bei dieser zweiten Ausführungsform eine ebenfalls sehr sichere Vierpunkthalterung für den Patienten erreicht, die auch starken Beschleunigungen nicht nur in Fahrtrichtung oder entgegen der Fahrtrichtung, sondern auch diagonal und quer dazu standhält. Durch entsprechende Längeneinstellung der beiden Schultergurte und der Anschlußenden des Beckengurtes kann in einfacher Weise sichergestellt werden, dass die beiden Gurtschlösser sich nicht im Bauchbereich des Patienten befinden und diesen somit auch nicht unangenehm belasten.

Selbstverständlich können die in den Fig. 1 bis 16 gezeigten Elemente in jeder für den Fachmann geeigneten Form miteinander kombiniert werden. Dies bedeutet, dass die längsverschiebbare Kopfstütze und/oder Fußstütze gemäß den Figuren 1 bis 5 und die integrierte Rückhaltevorrichtung für Kinder gemäß den Fig. 6 bis 12 sowie die in den Fig. 13 bis 16 dargestellten Ausführungsbeispiele einer seitlichen Auffangvorrichtung in jeder für den Fachmann geeigneten Form miteinander kombiniert werden können.

## Patentansprüche

1. Krankentrage (1) mit einem Patienten-Rückhaltesystem (2) und einer Tragenauflage (3), wobei das Patienten-Rückhaltesystem (2) umfasst:
- eine Rückhaltevorrichtung für erwachsene Personen, umfassend wenigstens einen Schultergurt (4) und einen Quergurt (17), durch welche eine liegende erwachsene Person auf der Tragenauflage (3) sicherbar ist; sowie
- eine Rückhaltevorrichtung (30) für Kinder und Klein- oder Kleinstkinder, wobei die Kinder-Rückhaltevorrichtung (30) eine an die Körperabmessungen von Kindern und Klein- oder Kleinstkindern leicht anpassbare Halteeinrichtung (31, 34) aufweist, die so ausgebildet ist, dass sie den Körper des Kindes zumindest teilweise umschließt,
**dadurch gekennzeichnet, dass**
die Halteeinrichtung (31, 34) mit der Tragenauflage (3) in einem mittleren Bereich der Tragenauflage (3) ortsfest sicher verbunden ist, und dass
die Tragenauflage (3) als Matratze ausgebildet ist.

2. Krankentrage nach Anspruch 1, wobei die Kinder-Halteeinrichtung (31) eine den Körper zumindest teilweise umhüllende Manschette (34) aufweist, die mindestens partiell mit der Tragenauflage (3) fest vernäht und/oder verschweißt ist.

3. Krankentrage nach Anspruch 1 oder 2, wobei die Manschette (34) zwei in Bezug auf die Längsseiten der Tragenauflage (3) gerichtete seitliche Lappen (38, 39) aufweist, die von beiden Seiten einander überlappend um den Körper des Kindes herumlegbar sind, und die eine größere Breite aufweisen als die Tragenauflage (3), so dass ihre freien Enden beim Transport eines Erwachsenen oder im Zustand der Nichtbenutzung an den Längsrändern der Tragenauflage (3) befestigbar sind.

4. Krankentrage nach Anspruch 3, wobei die Manschette (34) eine Länge von 30 bis 40 cm in Längsrichtung der Tragenauflage (3) aufweist, eine etwas größere Breite als die Tragenauflage (3) hat, und wobei die Manschette (34) rechteck- oder trapezförmig ausgebildet ist.

5. Krankentrage nach Anspruch 3 oder 4, wobei die Manschette (34) an ihren beiden äußeren Längsrändern Klettbandstreifen (42, 43) zur Verbindung mit entsprechenden, an den beiden Längsseiten der Tragenauflage (3) vorgesehenen Klettbandstreifen (44, 45) aufweist, wobei die Klettbandstreifen (44, 45) an den beiden Längsseiten der Tragenauflage (3) in Längsfalten (46, 47) der Tragenauflage (3) verdeckt angeordnet sind.

6. Krankentrage nach einem der Ansprüche 2 bis 5, wobei die Manschette (34) mit mindestens einem verschließbaren Gurt (40) versehen ist.

7. Krankentrage nach Anspruch 6, wobei der Gurt und/oder die Manschette (34) so ausgebildet und angeordnet ist, dass er bzw. sie im am Kind angelegten Zustand den Körper des Kindes unterhalb von dessen Armen umgibt.

8. Krankentrage nach Anspruch 6 oder 7, wobei die Manschette (34) mit einem verschließbaren Gurt (40) am unteren und einem verschließbaren Gurt (41) am oberen Rand der Manschette (34) versehen ist.

9. Krankentrage nach einem der vorstehenden Ansprüche, ferner umfassend ein Tragengestell (10), wobei die Rückhaltevorrichtung (2) für erwachsene Personen eine am Kopfende (22) der Tragenauflage (3) angeordnete, abnehmbare und längsverschiebbare Kopfstütze (20) aufweist und/oder eine am Fußende (6) der Tragenauflage (3) eine die Oberseite der Tragenauflage (3) überragende Fußstütze (7) aufweist, die durch Gurte (8, 9) gesichert ist bzw. sind, die mit dem Tragengestell (10) fest verbunden sind.

10. Krankentrage nach Anspruch 9, wobei die Kopfstütze (20) an einem in Längsrichtung der Trage (1) anschlagbegrenzt verschiebbaren Tragbügel (21) befestigt ist und die Fußstütze (7) mit einem dass Fußende (6) der Tragenauflage (3) untergreifenden abgewinkelten Teil (7a) an der Tragenauflage (3) gesichert ist.

11. Krankentrage nach Anspruch 10, wobei der Tragbügel (21) das Kopfende (22) der Tragenauflage (3) U-förmig untergreift und an seinem unteren U-Schenkel einen Längsschlitz (23) aufweist, mit dem er an zwei an dem Tragengestell (10) im Abstand voneinander befestigten Führungsbolzen (24) hin- und herverschiebbar geführt ist, und dass die Fußstütze (7) in Längsrichtung der Trage (1) durch mindestens zwei unter der Tragenauflage (3) verlaufende Längsgurte (8) gesichert ist, die an mindestens einem oder zwei Fixpunkten (11) an dem Tragengestell (10) in einem zentralen Mittelbereich befestigt sind.

12. Krankentrage nach einem der vorstehenden Ansprüche, ferner umfassend eine seitliche Auffangvorrichtung (59) für den Patienten mit einem Beckengurt (60), der an beiden Längsseiten der Krankentrage (1) mit jeweils zwei zur Tragenmitte hin V-förmig zusammengeführten Gurtabschnitten (61, 62) an in Längsrichtung der Trage (1) jeweils paarweise beabstandeten Fixpunkten (63, 64) angeschlagen und mit den Schultergurten (4) derart verbunden ist, dass ein Gurtschloss (65) des Beckengurtes (60) seitlich am Patienten liegt.

13. Krankentrage nach Anspruch 12, wobei der Beckengurt (60) an vier Fixpunkten (63, 64) angeschlagen ist.

14. Krankentrage nach Anspruch 12 oder 13, wobei die Enden der Schultergurte (4) miteinander verbunden und vom Kopfende (22) der Tragenauflage (3) in Form einer Schlaufe (66) im Abstand von dessen Gurtschloss (65) um den Beckengurt (60) herumgeführt sind.

15. Krankentrage nach einem der Ansprüche 12 bis 14, wobei die Länge beider Schultergurte (4) zwischen dem Kopfende (22) der Tragenauflage (3) und dem Beckengurt (60) durch eine einzige Einstellschlaufe (67) an einem der beiden Schultergurte (4) veränderbar ist.

16. Krankentrage nach einem der Ansprüche 1 bis 11, ferner umfassend eine seitliche Auffangvorrichtung (59) für den Patienten mit einem Beckengurt (60), der an beiden Längsseiten der Krankentrage (1) so befestigt ist, dass die beiden Enden des Beckengurtes (60) mit zwei Gurtschlössern (65a, 65b) an den Enden der beiden Schultergurte (4) direkt verbindbar sind, wobei an den Schultergurten (4) unmittelbar neben den Gurtschlössern (65a, 65b) eine Spanneinrichtung (70) angreift, die die Enden der Schultergurte (4) unter gleichzeitiger Spannung des Beckengurtes (60) zur Tragenmitte hin zusammenhält.

17. Krankentrage nach Anspruch 16, wobei die Spanneinrichtung (70) aus einem längenveränderbaren Spanngurt (71) besteht, der um beide Schultergurte (4) schlaufenartig herumgeführt ist.

## Claims

1. A stretcher (1) including a restraining system (2) for incapacitated persons as well as a stretcher pad (3), said restraining system (2) for incapacitated persons comprising:
- a restraining device for an adult person, comprising at least one shoulder belt (4) and a cross belt (17) to enable a recumbent adult to be secured on the stretcher pad (3); as well as
- a restraining system (30) for a child, infant or baby, said child restraining system (30) comprising a holding means (31, 34) which is readily adaptable to the anatomy of children, infants and babies, said holding means being provided such that it surrounds the body of the child at least partially,
**characterized in that**
said holding means (31, 34) is securely connected, fixed in position, to the stretcher pad (3) in a central portion of the stretcher pad (3), and **in that**
the stretcher pad (3) is provided as mattress.

2. The stretcher according to claim 1, wherein the child holding means (31) comprises a cuff (34) which encloses the body of the child at least partially and is fixedly sewed and/or welded at least partially to the stretcher pad (3).

3. The stretcher according to claim 1 or 2, wherein the cuff (34) comprises two, directed in respect of the longitudinal sides of the stretcher pad (3), lateral flaps (38, 39) which can be placed around the body of the child in overlapping fashion and have a greater width than the stretcher pad (3) so that the free ends of said flaps can be secured to the longitudinal edges of the stretcher pad (3) when an adult person is being transported or the stretcher is in a state of non-use.

4. The stretcher according to claim 3, wherein the cuff (34) has a length of 30 to 40 cm in longitudinal direction of the stretcher pad (3) and a width which is slightly greater than that of the stretcher pad (3), said cuff (34) being of rectangular or trapezoidal shape.

5. The stretcher according to claim 3 or 4, wherein the cuff (34) comprises hook-and-loop fastening strips (42, 43) at its outer longitudinal edges to be connected to corresponding hook-and-loop fastening strips (44, 45) provided on both longitudinal sides of the stretcher pad (3), the hook-and-loop fastening strips (44, 45) on the two longitudinal sides of the stretcher pad (3) being covered in longitudinal folds (46, 47) of the stretcher pad (3).

6. The stretcher according to one of claims 2 to 5, wherein the cuff (34) is provided with at least one closable belt (40).

7. The stretcher according to claim 6, wherein the belt and/or cuff (34) is configured and disposed such that, when being applied to a child, surrounds the body of the child beneath the child's arms.

8. The stretcher according to claim 6 or 7, wherein the cuff (34) includes a closable belt (40) at the bottom edge thereof (34) and a closable belt (41) at the top edge thereof.

9. The stretcher according to one of the preceding claims, further comprising a stretcher frame (10), wherein the adult restraining system (2) comprises a removable and longitudinally adjustable head rest (20) provided at the head end (22) of the stretcher pad (3) and/or a foot rest (7) at the foot end (6) of the stretcher pad (3), said foot rest (7) projecting from the upper side of the stretcher pad and being secured by belts (8, 9) which are fixedly connected to the stretcher frame (10).

10. The stretcher according to claim 9, wherein the head rest (20) is fastened to a slidable support bracket (21), the sliding movement of which is limited in longitudinal direction of the stretcher (1) by a stop, and said foot rest (7) is secured to the stretcher pad (3) by means of an angled member (7a) which engages underneath the stretcher pad (3).

11. The stretcher according to claim 10, wherein the support bracket (21) engages beneath the head end (22) of the stretcher pad (3) in U-shaped manner and is formed with a longitudinal slit (23) in the bottom U-leg by means of which said support bracket (23) is guided on two guide pins (24), fastened spaced apart from each other to the stretcher frame (10), in order for the support bracket to move to and fro, said foot rest (7) being secured in longitudinal direction of the stretcher (1) by at least two longitudinal belts (8) which extend beneath the stretcher pad (3) and are fastened at least at one or two fixed positions (11) in a central portion of the stretcher frame (10).

12. The stretcher according to one of the preceding claims, further comprising a lateral safety device (59) for the incapacitated person, comprising a lap belt (60) which issues, at respective pairs of fixed positions (63, 64) spaced apart from each other in pairs in longitudinal direction of the stretcher (1), from both longitudinal sides of the stretcher (1) with respective two belt sections (61, 62) which merge in the form of a V towards the center of the stretcher, said lap belt (60) being connected to the shoulder belts (4) such that a lap lock (65) of the lap belt (60) is laterally placed on the incapacitated person.

13. The stretcher according to claim 12, wherein the lap belt (60) issues from four fixed positions (63, 64).

14. The stretcher according to claim 12 or 13, wherein the ends of the shoulder belts (4) are connected to each other and are guided from the head end (22) of the stretcher pad (3) in the form of a loop (66) around the lap belt (60) spaced apart from the belt lock (65) thereof.

15. The stretcher according to one of claims 12 to 14, wherein the length of both shoulder belts (4) between the head end (22) of the stretcher pad (3) and the lap belt (60) is adjustable by means of a single adjustment loop (67) provided at one of the two shoulder belts (4).

16. The stretcher according to one of claims 1 to 11, further comprising a lateral safety device (59) for the incapacitated person comprising a lap belt (60) which is fastened on both longitudinal sides of the stretcher (1) such that the two ends of the lap belt (60) are directly connectable to two belt locks (65a, 65b) at the ends of both shoulder belts (4), a tensioning device (70) acting on the shoulder belts (4) directly adjacent to the belt locks (65a, 65b) and holding the ends of the shoulder belts (4) together towards the center of the stretcher, while simultaneously tensioning the lap belt (60).

17. The stretcher according to claim 16, wherein the tensioning device (70) consists of a longitudinally adjustable tensioning belt (71) which extends around the two shoulder belts (4) in the form of a loop.

## Revendications

1. Civière (1) comportant un système de retenue du patient (2) et un support de portage (3), dans laquelle le système de retenue du patient (2) comprend :
- un dispositif de retenue pour personnes adultes, comprenant au moins une sangle-baudrier (4) et une sangle transversale (17), par lequel une personne adulte couchée est fermement immobilisée sur le support de portage (3); ainsi que
- un dispositif de retenue (30) pour enfants et petits ou très petits enfants, le dispositif de retenue pour enfants (30) présentant un dispositif de retenue (31, 34) qui peut être facilement adapté aux dimensions corporelles des enfants, petits enfants et très petits enfants, et qui est conçu de façon à entourer, au moins partiellement, le corps de l'enfant,
**caractérisée en ce que** le dispositif de retenue (31, 34) est relié au support de portage (3) de façon fermement immobilisée localement, dans une zone médiane du support de portage (3), et **en ce que** le support de portage (3) est conçu comme un matelas.

2. Civière selon la revendication 1, dans laquelle le dispositif de retenue pour enfants (31) présente un manchon (34) entourant au moins partiellement le corps, lequel manchon est cousu et/ou soudé au moins partiellement au support de portage (3).

3. Civière selon la revendication 1 ou 2, dans laquelle le manchon (34) présente deux lobes latéraux (38, 39) orientés par rapport aux côtés longitudinaux du support de portage (3), lesquels lobes peuvent être placés autour du corps de l'enfant depuis les deux côtés de façon à se chevaucher, et présentent une plus grande largeur que le support de portage (3), si bien que leurs extrémités libres, lors du transport d'un adulte ou à l'état de non-utilisation, peuvent être fixées au niveau des bords longitudinaux du support de portage (3).

4. Civière selon la revendication 3, dans laquelle le manchon (34) présente une longueur comprise entre 30 et 40 cm dans la direction longitudinale du support de portage (3) et une largeur un peu plus grande que le support de portage (3), et dans laquelle le manchon (34) est exécuté sous une forme rectangulaire ou trapézoïdale.

5. Civière selon la revendication 3 ou 4, dans laquelle le manchon (34) présente au niveau de ses deux bords longitudinaux externes des bandes auto-agrippantes (42, 43) permettant de les relier à des bandes auto-agrippantes (44, 45) correspondantes prévues au niveau des deux côtés longitudinaux du support de portage (3), les bandes auto-agrippantes (44, 45) étant disposées au niveau des deux côtés longitudinaux du support de portage (3) pour être masquées dans des plis longitudinaux (46, 47) du support de portage (3).

6. Civière selon l'une des revendications 2 à 5, dans laquelle le manchon (34) est muni d'au moins une sangle verrouillable (40).

7. Civière selon la revendication 6, dans laquelle la sangle et/ou le manchon (34) sont exécutés et disposés de façon telle qu'il (elle) entoure le corps de l'enfant en passant sous ses bras lorsque l'enfant est à l'état couché.

8. Civière selon la revendication 6 ou 7, dans laquelle le manchon (34) est muni d'une sangle verrouillable (40) au niveau du bord inférieur du manchon et d'une sangle verrouillable (41) au niveau du bord supérieur du manchon (34).

9. Civière selon l'une des revendications précédentes, comprenant en outre une armature de transport (10), le dispositif de retenue (2) pour personnes adultes présentant un appui-tête (20) disposé au niveau de l'extrémité côté tête (22) du support de portage (3), ledit appui-tête étant amovible et pouvant être déplacé en longueur ; et/ou, au niveau de l'extrémité côté pieds (6) du support de portage (3), un repose-pieds (7) dépassant au-dessus de la face supérieure du support de portage (3) ; appuie-tête et/ou repose-pieds qui est(sont) fermement immobilisé(s) par des sangles (8, 9) reliées de façon fixe à l'armature de transport (10).

10. Civière selon la revendication 9, dans laquelle l'appui-tête (20) est fixé au niveau d'un étrier de support (21) mobile dans la direction longitudinale de la civière (1) et limité par butée, et dans laquelle le repose-pieds (7) est fermement fixé au niveau du support de portage (3) par un élément coudé (7a) qui vient en prise par-dessous avec l'extrémité côté pieds (6) du support de portage (3).

11. Civière selon la revendication 10, dans laquelle l'étrier de support (21) vient en prise sous l'extrémité côté tête (22) du support de portage (3) en formant un U et présente au niveau de sa branche de U inférieure une fente longitudinale (23) via laquelle il est guidé de façon à se déplacer en va et vient par rapport à deux boulons de guidage (24) fixés au niveau de l'armature de portage (23) à une distance l'un de l'autre, et en ce que le repose-pieds (7) est fermement immobilisé dans la direction longitudinale de la civière (1) par au moins deux sangles longitudinales (8) qui s'étendent sous le support de portage (3) et sont fixées au niveau d'au moins un ou deux points de fixation (11) à l'armature de portage (10), dans une zone centrale.

12. Civière selon l'une des revendications précédentes, comprenant en outre un dispositif latéral de réception (59) du patient avec une sangle abdominale (60) qui est accrochée, au niveau de points de fixation (63, 64) écartés, respectivement, par paires dans la direction longitudinale de la civière (1) au niveau des deux côtés longitudinaux de la civière (1), par, respectivement, deux segments de sangle (61, 62) rassemblés vers le milieu de la civière en formant un V, ladite sangle abdominale étant reliée à la sangle-baudrier (4) de façon telle qu'un point de verrouillage (65) de la sangle abdominale (60) se trouve sur un côté du patient.

13. Civière selon la revendication 12, dans laquelle la sangle abdominale (60) est accrochée au niveau de quatre points de fixation (63, 64).

14. Civière selon la revendication 12 ou 13, dans laquelle les extrémités de la sangle-baudrier (4) sont reliées ensemble et sont guidées autour de la sangle abdominale (60) depuis l'extrémité côté tête (22) du support de portage (3) sous la forme d'une boucle (66) à une distance de son point de verrouillage (65).

15. Civière selon l'une des revendications 12 à 14, dans laquelle la longueur des deux sangles-baudriers (4) entre l'extrémité côté tête (22) du support de portage (3) et la sangle abdominale (60) peut être modifiée par une boucle de réglage (67) unique au niveau d'une des deux sangles-baudriers (4).

16. Civière selon l'une des revendications 1 à 11, comprenant en outre un dispositif latéral de réception (59) du patient ayant une sangle abdominale (60) qui est fixée au niveau des deux côtés longitudinaux de la civière (1) de façon à ce que les deux extrémités de la sangle abdominale (60) puissent être reliées directement avec deux points de verrouillage (65a, 65b) au niveau des extrémités des deux sangles-baudriers (4), et où, au niveau des sangles-baudriers (4), directement à côté des points de verrouillage (65a, 65b), se trouve un dispositif de serrage (70) qui retient ensemble les extrémités des sangles-baudriers (4) avec une tension simultanée de la sangle abdominale (60) vers le milieu de la civière.

17. Civière selon la revendication 16, dans laquelle le dispositif de serrage (70) se compose d'une sangle de serrage (71) modifiable en longueur qui est guidée autour des deux sangles-baudriers (4) à la façon d'une boucle.
